Europäisches Patentamt

European Patent Office

Office européen des brevets

(19)

(11) Numéro de publication: **0 243 220
B1**

(12) **FASCICULE DE BREVET EUROPEEN**

(45) Date de publication du fascicule du brevet:
01.08.90

(51) Int. Cl.⁵: **C11B 1/10**, B01J 8/10

(21) Numéro de dépôt: 87400614.1

(22) Date de dépôt: 19.03.87

(54) Procédé et dispositif d'extraction par ultrasons de produits oléagineux à partir de graines oléagineuses.

(30) Priorité: 20.03.86 FR 8604143

(43) Date de publication de la demande:
28.10.87 Bulletin 87/44

(45) Mention de la délivrance du brevet:
01.08.90 Bulletin 90/31

(84) Etats contractants désignés:
AT BE CH DE ES FR GB GR IT LI LU NL SE

(56) Documents cités:
FR-A- 1 004 547
FR-A- 1 142 134
GB-A- 2 097 014

(73) Titulaire: Guillot, Bernard René, 10, Chemin des Buissons, F-45220 Chateaurenard(FR)

(72) Inventeur: Guillot, Bernard René, 10, Chemin des Buissons, F-45220 Chateaurenard(FR)

(74) Mandataire: Kügele, Bernhard, NOVAPAT-CABINET CHEREAU 63 bis, boulevard Bessiéres, F-75017 Paris(FR)

ACTORUM AG

,Description

La présente invention a pour objet un procédé d'extraction d'huile et de graisse présentes dans les graines oléagineuses à l'aide d'ondes ultrasonores en présence d'un solvant ainsi que le dispositif associé.

Dans la suite du texte, y compris les revendications, l'"huile" sera définie comme comprenant l'huile et les graisses.

L'extraction de l'huile à partir de graines oléagineuses est bien connue de l'art antérieur. Elle est essentiellement basée sur le procédé dit de pressage à chaud, qui est un procédé mécanique et thermique qui a pour inconvénient de porter l'huile ainsi extraite à une température relativement élevée préjudiciable à sa qualité et de nécessiter des traitements complémentaires ultérieurs. Ce procédé a pour autre inconvénient d'être très gourmand en énergie notamment en énergie calorifique dans la phase dite de "cuisson". En effet la méthode de pressage à chaud comporte essentiellement une étape préalable de broyage, un premier pressage, un second broyage suivi d'une extraction chimique par percolation. On comprend alors que le matériel mécanique soit très sollicité et qu'il nécessite un entretien important.

A toutes ces dépenses d'énergie proprement dites, s'ajoute également le coût généré par le fait que le temps de traitement est long compte tenu des différentes phases notamment celles de l'homogénéisation en température et que de plus on chauffe inutilement l'ensemble tourteau et huile, les calories absorbées par le tourteau étant perdues ou difficilement recupérables.

Un autre inconvénient des procédés et dispositifs de l'art antérieur utilisant le pressage à chaud est mis en évidence par l'interprétation des résultats d'extraction. En effet, le taux d'extraction final n'est pas suffisant puisqu'il subsiste entre 10 et 20% d'huile dans le tourteau, cette huile n'ayant pas pu être extraite par les procédés thermique et mécanique connus.

On connaît par ailleurs la demande de brevet britannigue n° 2 097 014 qui propose d'utiliser des ultrasons pour la récupération de cette huile résiduelle au sein des fibres constituant le tourteau de palme après que celui-ci ait subi un pressage à chaud par un procédé classique.

Ce procédé prévoit de faire passer le tourteau après la première extraction dans un bain de solvant, ce bain étant soumis à l'action d'ondes ultrasoniques émises par des transducteurs intrusifs placés sur la paroi du bac contenant le bain, ces transducteurs étant disposés de telle façon que les ondes ultrasonores se coupent à angle droit.

Un tel procédé est donc complémentaire d'une extraction principale réalisée suivant un mode opératoire classique et l'huile résiduelle recupérée par nettoyage du tourteau à l'aide d'ultrasons a été préalablement portée à des températures élevées et la qualité de l'huile récupérée rend nécessaire les traitements ultérieurs.

D'autre part, cette méthode, de traitement d'un tourteau dans un bac présente l'inconvénient d'une grande consommation d'énergie ultrasonore et d'une mauvaise propagation puisque les volumes sont importants et que l'huile mélangée au solvant atténue l'énergie ultrasonore.

La présente invention a donc pour but de proposer un procédé d'extraction qui pallie ces inconvénients et qui réduit la quantité d'énergie nécessaire tout en améliorant le rapport masse de graines traitées/quantité d'énergie consommée pour une masse d'huile extraite.

Le procédé selon l'invention consiste à effectuer une première extraction sous agitation de l'huile dite libre, puis à soumettre le tourteau à des ondes ultrasonores toujours dans un solvant de façon à extraire l'inextractible, c'est-à-dire l'huile liée et enfermée dans les cellules elles-mêmes non brisées par le traitement mécanique initial. Ce procédé se caractérise par la succession des étapes suivantes :
- traitement mécanique préalable des graines, sans cuisson,
- extraction dans un bac par solvant sous agitation,
- traitement par ultrasons des graines en présence de solvant de façon à faire migrer le solvant à travers les graines,
- traitement par au moins un lavage par aspersion externe,
- traitement du miscella par distillation et évacuation du tourteau vers une tour de récupération du solvant du type désolvanteur.

Ce procédé se caractérise de plus en ce que le traitement des graines est un broyage et/ou un aplatissage.

Le traitement par ultrasons est réalisé par passage du tourteau et du solvant dans un tube comportant deux transducteurs sous forme de plaques diamétralement opposées; le solvant pouvant être l'hexane ou un fluide à l'état super-critique tel que le gaz carbonique.

Le lavage comprend au moins une aspersion, le miscella étant recyclé de l'aval vers l'amont.

Le procédé se caractérise également en ce que l'on travaille sous pression lorsque l'on utilise un fluide super-critique de façon à ce que le solvant reste à l'état super-critique et/ou que l'on travaille en dépression lorsque l'on utilise un solvant volatil afin de limiter les fuites vers l'extérieur à partir de l'extracteur dans un but de sécurité.

Le dispositif associé comporte une unité de travail mécanique, une alimentation étanche en graines préalablement traitées mécaniquement, un bac d'extraction avec mélangeur, une unité de traitement par ultrasons en continu constituée d'un tube comportant au moins un jeu de transducteurs ultrasoniques diamétralement opposés, une alimentation de solvant, une unité de lavage constituée d'au moins un transporteur, d'au moins une rampe d'aspersion de solvant et d'au moins un circuit de recyclage, une évacuation étanche du miscella, une évacuation étanche du tourteau résiduel.

L'enceinte d'extraction isolée dans le cas de l'utilisation d'un fluide super-critique devra pouvoir résister à une pression de 80 bars.

L'enceinte d'extraction isolée dans le cas d'une utilisation de solvant volatil supporte une légère dépression jusqu'à 0,8 bar.

L'unité de travail mécanique comporte des rouleaux à surface lisse et à entraxe réglable dans le cas de l'aplatissage et/ou des rouleaux à surface cannelée dans le cas du broyage.

D'autres avantages et caractéristiques apparaîtront à la lecture de la description qui va suivre d'un mode de réalisation particulier en accord avec l'invention et en regard des figures annexées qui représentent :

Figure 1 : vue en coupe d'une installation selon l'invention;
Figure 2 : courbe d'extraction quantité d'huile en fonction du temps.

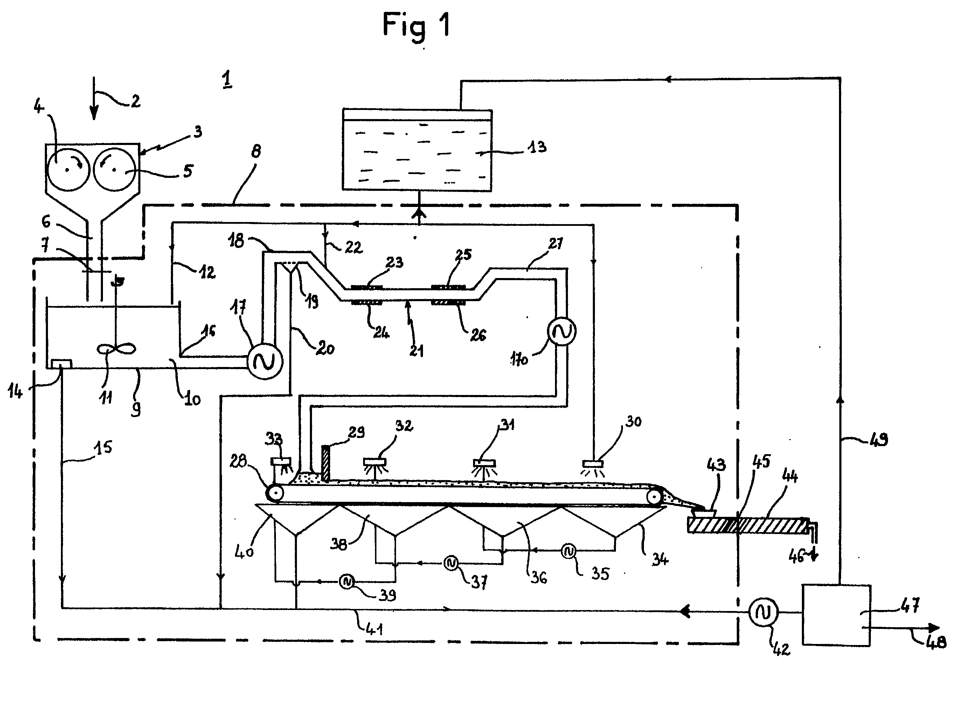

On voit, figure 1, le dispositif 1 selon l'invention qui comporte une alimentation en graines oléagineuses symbolisée par la flèche 2, ces graines oléagineuses sèches étant dirigées dans un moyen de traitement mécanique 3 constitué de deux rouleaux 4 et 5 dont l'entraxe peut être réglé de façon que l'écartement entre les surfaces du rouleau soit ajustable avec grande précision, ces rouleaux étant entraînés classiquement de façon contra-rotative. La surface de ces rouleaux est lisse dans le cas d'un aplatissage et présente une forme cannelée lors d'un broyage.

L'évacuation est réalisée par gravité à travers le conduit 6, qui est munie d'un dispositif anti-retour 7 de façon à supprimer toute fuite vers l'extérieur à partir de l'enceinte isolante 8 représentée en traits mixtes. Cette enceinte devra par ailleurs être résistante à la pression dans le cas de la mise en oeuvre du procédé en utilisant un fluide super-critique comme solvant et les étanchéités seront prévues également pour une légère dépression interne dans le cas où la mise en oeuvre prévoit un solvant volatil dans ce cas on peut atteindre des dépressions entre 0,8 et 1 bar. Par équivalence cette évacuation 6 et le dispositif anti-retour 7 peuvent être aisément remplacés par un convoyage à l'aide d'une vis d'Archimède dont le pas variable permet la compression ponctuelle de la matière créant ainsi un bouchon d'étanchéité.

L'évacuation 6 alimente donc une cuve 9 contenant du solvant 10, l'ensemble graine plus solvant étant agité, à l'aide d'un mélangeur 11. La cuve 9 est en permanence alimentée en solvant par la canalisation 12 elle-même reliée au réservoir de solvant 13 extérieur à l'enceinte 8. Cet apport de solvant est destiné à compenser le volume de solvant évacué par l'intermédiaire de la crépine 14 située au fond du bac 9, le premier miscella étant alors transféré par l'intermédiaire de la canalisation 15. Ce bac 9 est également muni d'une sortie 16 à travers laquelle est aspiré le mélange graine-solvant par l'intermédiaire de la pompe 17, cette dernière refoulant l'ensemble solvant plus graine jusqu'au poste de séparation 18 muni d'un tamis 19 à travers lequel s'écoule une autre partie du miscella tandis que les graines retenues sur le tamis sont poussées jusque dans le dispositif ultrasonique 21. Le miscella est évacué par l'intermédiaire de la canalisation 20 qui rejoint la canalisation d'évacuation 15. A l'entrée du dispositif ultrasonique 21 est prévue une alimentation en solvant propre 22 destinée à remplacer le miscella qui vient d'être évacué et de façon à ce que le milieu soit conducteur des ondes ultrasoniques.

Le dispositif ultrasonique comprend au moins une paire de plaques telles que 23, 24, diamétralement opposées, ces plaques étant des transducteurs ultrasoniques reliés de façon classique à un générateur (non représenté). De même, on a représenté un deuxième jeu de plaques 25, 26 équivalent aux premières et jouant le même rôle. Le mélange tourteau solvant est alors évacué par l'intermédiaire de la canalisation 27 jusque sur un transporteur 28 du type à tapis mobile, le tapis étant par exemple constitué d'un treillis métallique ou d'une bande munie de perforations. L'évacuation étant assurée par la pompe 170.

Une règle 29 d'égalisation est fixée sur le bâti du transporteur.

Des rampes d'aspersion 30, 31, 32 et 33 sont disposées sur toute la longeur du transporteur 28 de façon qu'elles puissent arroser le tourteau sur toute la longeur du transporteur. Le lavage se faisant de l'aval vers l'amont, on prévoit que l'aspersion 30 est directement alimentée par le solvant en provenance du réservoir 13. Ce solvant récupéré par un bac 34 situé à la partie inférieure du transporteur 28 récupère le solvant chargé en huile par le premier rinçage. Une pompe 35 a pour rôle de transférer ce solvant jusqu'à la rampe d'aspersion 31 située en amont de la rampe 30 le mélange solvant plus huile étant alors récupéré par le bac 36 ce mélange étant pompé par la pompe 37 pour venir alimenter la rampe d'aspersion 32 située en amont de la rampe 31, le mélange solvant plus huile à nouveau chargé en huile est collecté par le bac 38 et pompé par l'intermédiaire de la pompe 39 qui alimente la rampe d'aspersion 33 située en amont de la rampe 32 c'est-à-dire en tête du transporteur 28 le miscella final étant alors collecté par le bac 40 et évacué sur la ligne de collecte centrale 41 munie d'une pompe 42 située à l'extérieur de l'enceinte 8.

Le tourteau est alors évacué par l'extrémité du tapis jusque dans la trémie d'alimentation 43 d'un transporteur à vis 44 à pas variable ce dernier étant diminué au passage de l'enceinte 8 de façon à créer un bouchon d'étanchéité en 45. Le tourteau est ensuite évacué comme l'indique la flèche 46 en sortie du transporteur à vis vers un dispositif permettant de récupérer le solvant du type désolvateur. D'autre part, le miscella pompé par l'intermédiaire de la pompe 42 est traité par une tour de distillation 47 qui a pour but de séparer le solvant de l'huile celle-ci étant évacuée en 48 vers un dispositif de raffinage habituel tandis que le solvant est recyclé en 49 jusque dans le bac de stockage 13.

Le procédé selon l'invention consiste à traiter les graines mécaniquement en 3 pour donner à chaque graine une configuration aplatie de façon à augmenter sa surface de contact. Cet aplatissage peut de façon facultative être suivi d'un broyage qui a pour effet d'augmenter cette surface de contact mais qui a pour inconvénient de "bourrer" le dispositif, ce qui rend nécessaire de prévoir un moyen de décolmatage.

Les graines sont alors introduites dans le bac 9 rempli de solvant par l'intermédiaire de la canalisation 12 tandis que le malaxeur 11 assure un mélange de l'ensemble de façon à ce que l'agitation favorise la première extraction. Cette dernière consiste à extraire l'huile libre des graines oléagineuses par dissolution de l'huile dans le solvant. Cette extraction est fonction du temps et l'on admet que pour obtenir un taux d'extraction d'environ 80 % il est nécessaire que la graine reste au contact du solvant pendant un intervalle de temps de l'ordre de 10 minutes. Il est bien entendu que l'efficacité est fonction de l'intensité du mélange et qu'en augmentant l'agitation on favorise l'extraction, le calcul du rapport le plus favorable étant à la portée de l'homme de l'art. De même afin d'améliorer l'extraction on prévoit une évacuation partielle du solvant chargé en huile de façon à ce qu'il soit recyclé le plus rapidement possible. L'autre partie du miscella et des graines est pompée pour être envoyée à une section de séparation dans laquelle une grille permet d'évacuer le miscella tout en retenant les graines partiellement désignées.

A ce stade de l'extraction, il subsiste dans les graines une partie en huile liée car cette huile est encore contenue dans les cellules et non accessible par trempage dans le solvant. C'est ainsi que selon le procédé, de l'invention, les graines sont conduites dans un dispositif à ultrasons tout en étant arrosées de solvant propre. En 22 l'émetteur d'ultrasons proprement dit dont la fréquence varie entre 10 et 50 KHz est constitué de deux plaques jouant le rôle de transducteurs diamétralement opposées. Le rôle des ultrasons est alors non pas d'effectuer un rinçage mais de briser l'inextractible c'est-à-dire d'extraire l'huile résiduelle. De façon à augmenter le rendement sans augmenter les temps de traitement, il est possible comme dans le mode de réalisation représenté de prévoir deux séries de plaques à ultrasons. Le miscella obtenu est alors évacué en même temps que le tourteau, pour déboucher sur un transporteur à tapis perforé 28, le dernier séparant dans un premier temps le miscella qu'il évacue en 40 et le tourteau qu'il est nécessaire de rincer afin de récupérer la totalité de l'huile extraite. Dans ce but, le procédé prévoit d'égaliser une couche régulière de tourteau que l'on soumet à un arrosage de solvant de moins en moins chargé d'huile de façon que le dernier lavage s'effectue avec du solvant propre directement issu du bac de stockage 13 par l'intermédiaire de la rampe 30.

Le tourteau déshuilé est alors évacué par l'intermédiaire du transporteur à vis 44 vers un désolvanteur de façon à récupérer le solvant absorbé par le tourteau. L'ensemble des miscellas recueilli des canalisations 15, 20 et 21 est pompé jusque dans une unité de distillation extérieure à l'enceinte que sépare l'huile du solvant qui est alors recyclé.

Dans ce mode de réalisation, le solvant utilisé est un solvant de qualité alimentaire, l'hexane. Il est entendu que les effets du solvant sont améliorés par l'augmentation de la température. C'est ainsi que ce mode de réalisation particulier donne un optimum avec de l'hexane chauffé entre 50 et 55°. Le présent procédé peut également être utilisé avec des solvants super-critiques tels que du gaz carbonique pris dans ses conditions super-critiques c'est-à-dire 73 bars de pression à 31,3°C. En effet, la solubilité des huiles est augmentée et la masse volumique est de 0,468 gramme par centimètre cube tandis que la viscosité diminue considérablement par rapport à la viscosité d'un solvant classique. Ces qualités améliorent le rendement de l'extraction en améliorant le rendement des ultrasons à travers le solvant, le passage du solvant à travers les graines de façon à briser les cellules entières, le rendement au niveau de la séparation du miscella puisqu'il suffit dans le cas du gaz carbonique par exemple de diminuer la pression pour provoquer un état de changement de phase et donc une séparation immédiate.

Ce procédé peut être amélioré par un traitement préalable des graines consistant en un décortiquage. C'est ainsi que l'on a montré que, sur un taux de 25 % de coques, en en supprimant 15 %, le taux protéinique du tourteau obtenue passe de 30 % à 40 %. De même l'huile obtenue avec décortiquage préalable présente dans sa composition finale moins de cire ce qui conduit à un raffinage simplifié et donc moins coûteux. Le rendement ultrasonique est également amélioré par le fait que les coques se comportent comme un "matériau élastique", les ultrasons sont moins absorbés et plus efficaces sur les cellules renfermant l'huile. Par ailleurs, on remarquera que la quantité de solvant nécessaire est diminuée d'autant puisque le volume de solvant absorbé par les coques est supprimé.

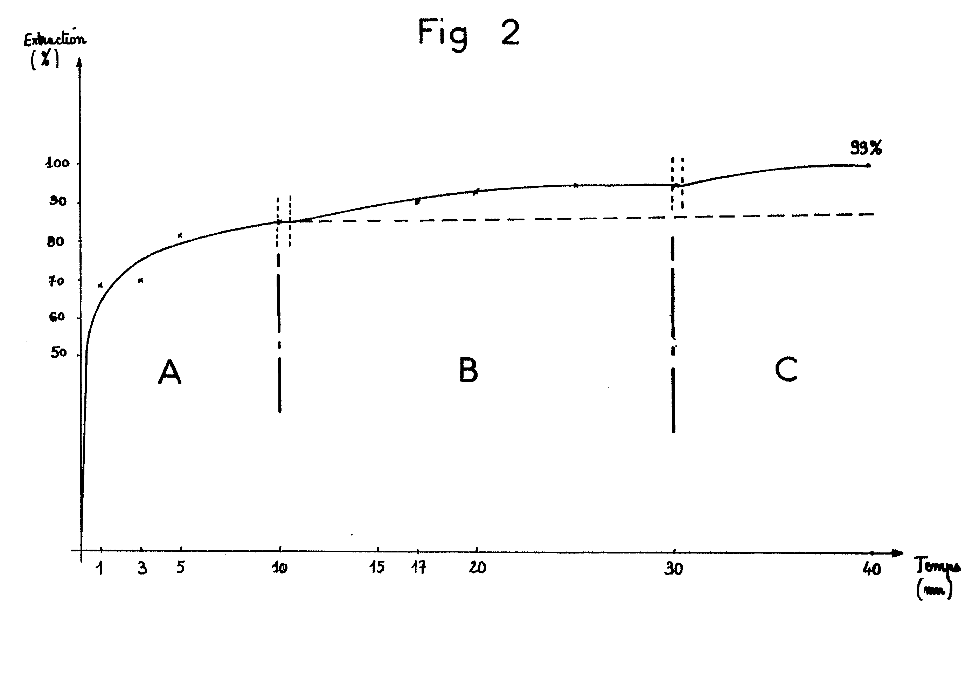

La figure 2 représente une courbe d'extraction suivant l'invention dans laquelle on fait subir aux graines un séjour de 10 minutes dans le bac 9 d'extraction, ces mêmes graines étant consécutivement soumises à un traitement aux ultrasons de 20 minutes.

On constate sur la partie A de la courbe que la dissolution de l'huile dans le solvant est très rapide dans les premiers instants pour se stabiliser à partir d'une dizaine de minutes. En effet, le taux maximum d'extraction dans de telles conditions sera atteint au bout de 120 minutes en présence d'un recyclage en continu du solvant.

La partie B de la courbe représente la courbe d'extraction à l'aide d'ultrasons et après 20 minutes on atteint la valeur de 93,83 % d'extraction.

La partie C de la courbe représente alors l'extraction complémentaire obtenue par lavage du tourteau ce qui conduit à un taux de 99 % d'extraction après 15 minutes de lavage.

De tels résultats ont été obtenus dans des conditions du mode opératoire suivantes :
Solvant utilisé : hexane
Puissance ultrasonique dissipée : 600W
Température du solvant : 50 à 55°C
Type de graines oléagineuses : Tournesol.

Il est entendu que l'on peut utiliser des principes classiques dans le domaine technique considéré de manière à améliorer les rendements, de tels principes bien connus consistent à ajouter un certain pourcentage de tensio-actif dans le solvant ou bien même à augmenter le pH du milieu de façon à le rendre plus basique.

Les avantages qui découlent du procédé et du dispositif selon l'invention sont nombreux à commencer par le tourteau résiduel qui est plus riche en protéines puisque les graines initiales n'ont pas subi de cuisson et n'ont donc pas été portées à une température élevée qui aurait entraîné leur dégradation.

Dans le cas des graines contenant des thioglucosides comme le colza, le tourteau ne contient pas de produits toxiques comme l'isothiocyanate ou la vinyloxazolidinethione résultant de la transformation par une enzyme, la mirosinase qui agit pendant la cuisson.

Les produits oléagineux obtenus sont de très bonne qualité puisqu'ils contiennent beaucoup moins de peroxyde et les produits secondaires d'oxydation sont totalement absents ce qui présente un grand intérêt dans le cas d'huile de tournesol contenant 60 % d'acide linoléïque. Les produits obtenus en sortie de procédé sont de couleur claire ce qui de plus nécessite moins de terre décolorante lors du raffinage.

Le taux d'acidité est plus faible ce qui conduit à des quantités moindres de soude pour la neutralisation.

D'autre part, l'invention présente un avantage supplémentaire quant au coefficient de fonctionnement proportionnel à la disponibilité du matériel. On sait que les procédés classiques du type pressage à chaud lorsque l'installation est arrêtée pendant quelques minutes pour une raison telle qu'une coupure de courant qu'il y a des risques de bourrage au niveau de la vis qui nécessitent le plus souvent un nettoyage complet de la vis du fourreau avant remise en route car les moteurs d'entraînement déjà de forte capacité ne peuvent pas surmonter de bourrage.

L'avantage essentiel du procédé et du dispositif selon l'invention se retrouvent au niveau du gain de temps de traitement.

1°) Procédé classique de pressage à chaud suivi d'une percolation ou d'une immersion dans un solvant. Dans ce cas après cuisson pendant 1h30 à 120°C, les graines sont pressées pendant 40 minutes à une température de 160°C pour être soumises à une percolation ou à une immersion pendant 18 minutes, le taux d'extraction final étant voisin de 99 %.

2°) Immersion sous agitation dans un solvant.
Taux d'extraction de 99 % obtenu au bout de 120 minutes. Dans le cas de l'hexane la température sera de 55°. Le rapport de solvant par rapport à la masse de graines est de 1,8 à 8,8 litres pour 100 grammes.

3°) Procédé selon l'invention.
Taux d'extraction 99 % obtenu au bout de 45 minutes maximum pour une température de 55° avec une quantité de solvant de l'ordre de 2,5 litres pour 100 grammes.

La présente invention n'est pas limitée aux exemples de réalisation qui viennent d'être décrits, elle est au contraire susceptible de modifications et de variantes qui apparaîtront à l'homme de l'art. C'est ainsi que l'hexane pourrait être remplacé par du benzène, du trichloroéthylène ou du bisulfure de carbone.

**Revendications**

1- Procédé d'extraction d'huile et de matière grasse de graines oléagineuses sèches à l'aide d'un solvant, caractérisé en ce qu'il comprend la succession d'étapes suivantes :
- traitement mécanique préalable des graines, sans cuisson;
- extraction d'huile et de matière grasse dans un bac par solvant sous agitation ;
- traitement par ultrasons des graines en présence de solvant ;
- traitement par au moins un lavage par aspersion externe de solvant ;
- traitement du miscella par distillation et évacuation du tourteau pour récupération du solvant.

2 - Procédé selon la revendication 1, caractérisé en ce que le traitement mécanique préalable est un broyage et/ou un aplatissage.

3 - Procédé selon la revendication 1, caractérisé en ce que le solvant dans l'étape d'extraction par solvant sous agitation est soutiré et renouvelé en continu.

4 - Procédé selon la revendication 1, caractérisé en ce que le traitement par ultrasons est effectué avec du solvant propre par passage des graines entre deux transducteurs plaques diamétralement opposées.

5 - Procédé selon la revendication 1, caractérisé en ce que le solvant de lavage est recyclé en amont puis récupéré en tête pour être évacué vers le poste de distillation.

6 - Procédé selon la revendication 1, caractérisé en ce que le tourteau déshuilé est évacué par un transporteur à vis dans lequel on crée un bouchon étanche.

7 - Procédé selon l'une quelconque des revendications précédentes, caractérisé en ce que le solvant utilisé est de l'hexane.

8 - Procédé selon la revendication 7, caractérisé en ce que l'hexane est porté à une température comprise entre 50 et 55° C.

9 - Procédé selon la revendication 7 ou 8, caractérisé en ce que l'on travaille en libre dépression comprise entre 0,8 et 1 bar.

10 - Procédé selon l'une des revendications 1 à 6, caractérisé en ce que le solvant utilisé est un fluide supercritique.

11 - Procédé selon la revendication 10, caractérisé en ce que le solvant supercritique est le gaz carbonique pris dans ses conditions supercritiques 73 bars à 31,3°C.

12 - Dispositif pour la mise en œuvre du procédé selon l'une des revendications 1 à 11, caractérisé en ce qu'il comprend une unité de travail mécanique (3), une alimentation étanche (6, 7) de l'enceinte d'extraction isolée (8), un bac (9) d'extraction par solvant avec mélangeur (11), soutirage (16, 15) et alimentation (12), une unité de traitement par ultrasons (21) comportant au moins un jeu de transducteurs ultrasoniques (23, 24) et une alimentation de solvant (22), une unité de lavage (28-40), une évacuation étanche du miscella (41), une évacuation étanche (44, 45) du tourteau, un dispositif permettant de récupérer le solvant.

13 - Dispositif selon la revendication 12, caractérisé en ce que l'unité de travail mécanique (3) comporte deux rouleaux (4, 5) à entraxe réglable dont les surfaces sont lisses et/ou cannelées.

14 - Dispositif selon la revendication 12, caractérisé en ce que l'alimentation étanche (6) comporte un dispositif antiretour (7).

15 - Dispositif selon la revendication 12, caractérisé en ce que l'unité de traitement (21) par ultrasons comporte au moins deux transducteurs (23, 24) diamétralement opposés du type plaques.

16 - Dispositif selon la revendication 15, caractérisé en ce que l'unité de traitement (21) comprend deux paires successives (23, 24) et (25, 26) de transducteurs ultrasoniques.

17 - Dispositif selon la revendication 12, caractérisé en ce que l'unité de lavage comporte au moins deux rampes d'aspersion (30, 31), au moins une pompe de recyclage (35), au moins deux bacs (34, 36) de récupération, un tapis mobile (28) perforé.

18 .- Dispositif selon la revendication 12, caractérisé en ce que l'évacuation étanche du tourteau est un transporteur à vis (44) dans lequel le pas de la vis est diminué sur une certaine partie (45) pour créer un bouchon.

**Claims**

1 - A process for extracting oil and fat material from dry oleaginous seeds with a solvent, characterized in that it concludes the following steps:
- preliminary mechanical treatment of the seeds without baking;
- extraction of oil and fat material in a tank by means of a solvent through stirring;
- ultrasonic treatment of the seeds in presence of a solvent;
- treatment with at least a washing step by means of an external spraying of a solvent;
- miscella treatment through distilling and discharge of the expeller in order to recover the solvent.

2 - The process of claim 1, characterized in that the preliminary mechanical treatment includes a pounding and/or flattening step.

3 - The process of claim 1, characterized in that the solvent in the step of extraction by means of a solvent through stirring is continuously drawon off and renewed.

4 - The process of claim 1, characterized in that the ultrasonic treatment is carried out with a clean solvent by making seeds passing between two diametrically plate transducers.

5 - The process of claim 1, characterized in that the washing solvent is recycled on the upstream side, then recycled on the head side to be discharged to the distillation station.

6 - The process of claim 1, characterized in that the de-oiled expeller is discharged by means of a worm conveyor in which a sealed plug is formed.

7 - The process of any preceding claims, characterized in that the solvent used includes hexane.

8 - The process of claim 7, characterized in that said hexane is heated to 50-55° C.

9 - The process of claim 7 or 8, characterized in that it is carried out in a free depression between .8 and 1 bar.

10 - The process of any claims 1-6, characterized in that the solvent used is a supercritic fluid.

11 - The process of claim 10, characterized in that said supercritic solvent is the carbon dioxide in the supercritic conditions thereof, i.e. 73 bars at 31.3° C.

12 - A device for implementing the process of one the claims 1-11, characterized in that it includes a mechanical work unit (3), a sealed supply (6, 7) for the isolated extraction enclosure (8), a solvent extraction tank (9) with a mixer (11), drawing-off means (16, 15) and feeding means (12), an ultrasonic treatment unit (21) including at least a set of ultrasonic transducers (23, 24) and a solvent feeding means (22), a washing unit (28-40), a miscella discharge means (41), an expeller sealed discharge means (44, 45), a device for recovering said solvent.

13 - The device of claim 12, characterized in that said mechanical work unit (3) includes two rolls (4, 5) with an adjustable centre distance, the surfaces of which are smooth and/or ribbed.

14 - The device of claim 12, characterized in that said sealed supply (6) includes a reverse-lock device (7).

15 - The device of claim 12, characterized in that said ultrasonic treatment unit (21) includes at least two diametrically opposed transducers of the plate type.

16 - The device of claim 15, characterized in that said treatment unit (21) includes two successive pairs (23, 24) and (25, 26) of ultrasonic transducers.

17 - The device of claim 12, characterized in that said washing unit includes at least two spraying ramps (30, 31), at least a recycling pump (35), at least two recovering tanks (34, 36), a perforated movable belt (28).

18 - The device of claim 12, characterized in that said expeller discharge means is a worm conveyor (44), in which a portion (45) of the screw pitch is reduced in order to form a plug.

**Patentansprüche**

1. Verfahren zur Extraktion von öl und fetthaltigem Material aus trockenen, ölhaltigen Körnern mittels eines Lösungsmittels, gekennzeichnet durch die folgenden Verfahrensschritte,
- vorherige mechanische Behandlung der Körner ohne Erhitzung,
- Extraktion von Öl und fetthaltigem Material in einem Behälter mittels eines Lösungsmittels unter Umrühren,
- Behandlung der Körner durch Ultraschall in Gegenwart von Lösungsmittel,
- Behandlung durch wenigstens einen Waschvorgang durch externes Besprühen mit Lösungsmittel,
- Behandlung des Gemisches durch Destillation und Ableitung der Masse zur Wiedergewinnung des Lösungsmittels.

2. Verfahren nach Anspruch 1, dadurch gekennzeichnet, daß die vorherige mechanische Behandlung ein Mahl- und/oder Pressvorgang ist.

3. Verfahren nach Anspruch 1, dadurch gekennzeichnet, daß das Lösungsmittel bei der Extraktion durch Lösungsmittel unter Umrühren kontinuierlich abgeleitet und erneuert wird.

4. Verfahren nach Anspruch 1, dadurch gekennzeichnet, daß die Behandlung durch Ultraschall mit sauberem Lösungsmittel durch Durchführen der Körner zwischen zwei diametral gegenüberliegenden Transduktorplatten erfolgt.

5. Verfahren nach Anspruch 1, dadurch gekennzeichnet, daß das Waschlösungsmittel stromaufwärts umgewälzt und dann am Anfang wiedergewonnen wird, um zur Destillationsstation abgeleitet zu werden.

6. Verfahren nach Anspruch 1, dadurch gekennzeichnet, daß die ölfreie Masse durch einen Schneckenförderer abgeleitet wird, in dem ein dichter Verschluß gebildet wird.

7. Verfahren nach einem der vorhergehenden Ansprüche, dadurch gekennzeichnet, daß das verwendete Lösungsmittel Hexan ist.

8. Verfahren nach Anspruch 7, dadurch gekennzeichnet, daß das Hexan auf eine Temperatur von 50 bis 55°C gebracht wird.

9. Verfahren nach Anspruch 7 oder 8, dadurch gekennzeichnet, daß man bei freier Dekompression zwischen 0,8 und 1 bar arbeitet.

10. Verfahren nach einem der Ansprüche 1 bis 6, dadurch gekennzeichnet, daß das verwendete Lösungsmittel ein überkritisches Fluid ist.

11. Verfahren nach Anspruch 10, dadurch gekennzeichnet, daß das überkritische Lösungsmittel Kohlensäuregas ist, das bei seinen überkritischen Bedingungen bei 73 bar und 31,3°C gewonnen wird.

12. Vorrichtung zur Durchführung des Verfahrens nach einem der Ansprüche 1 bis 11, gekennzeichnet durch eine mechanische Bearbeitungseinheit (3), eine dichte Beschickungseinrichtung (6, 7) des isolierten Extraktionsgehäuses (8), einen Lösungsmittelextraktionsbehälter (9) mit einem Rührwerk (11), eine Ableitung (16, 15) und eine Zuleitung (12), eine Ultraschallbehandlungseinheit (21), die wenigstens einen Satz Ultraschalltransduktoren (23, 24) und eine Lösungsmittelzuführung (22) aufweist, eine Wascheinheit (28-40), eine dichte Ableitung (41) für das Gemisch, eine dichte Ableitung (44, 45) für die Masse und eine Einrichtung, die die Wiedergewinnung des Lösungsmittels ermöglicht.

13. Vorrichtung nach Anspruch 12, dadurch gekennzeichnet, daß die mechanische Bearbeitungseinheit (3) zwei Walzen (4, 5) mit einstellbarem Abstand aufweist, deren Oberflächen glatt und/oder geriffelt sind.

14. Vorrichtung nach Anspruch 12, dadurch gekennzeichnet, daß die dichte Zuführung (6) eine Rücklaufsperreinrichtung (7) aufweist.

15. Vorrichtung nach Anspruch 12, dadurch gekennzeichnet, daß die Ultraschallbehandlungseinheit (21) wenigstens zwei diametral angeordnete Plattentransduktoren (23, 24) aufweist.

16. Vorrichtung nach Anspruch 15, dadurch gekennzeichnet, daß die Behandlungseinheit (21) zwei Paare aufeinanderfolgender Ultraschalltransduktoren (23, 24 und 25, 26) aufweist.

17. Vorrichtung nach Anspruch 12, dadurch gekennzeichnet, daß die Wascheinheit wenigstens zwei Sprührampen (30, 31), wenigstens eine Umwälzpumpe (35), wenigstens zwei Rückgewinnungsbehälter (36) und ein bewegliches perforiertes Band (28) aufweist.

18. Vorrichtung nach Anspruch 12, dadurch gekennzeichnet, daß die dichte Ableitung für das Gemisch ein Schneckenförderer (44) ist, in dem die Schneckenspindelsteigung auf einem bestimmten Teil (45) zur Bildung eines Verschlusses verringert ist.

Fig 1

Fig 2